(19) Europäisches Patentamt
European Patent Office
Office européen des brevets

(11) **EP 2 691 456 B1**

(12) **EUROPEAN PATENT SPECIFICATION**

(45) Date of publication and mention
of the grant of the patent:
**24.06.2015 Bulletin 2015/26**

(51) Int Cl.:
*C08L 23/14* (2006.01)  *C08F 297/08* (2006.01)
*C08F 2/00* (2006.01)

(21) Application number: **12711156.5**

(22) Date of filing: **26.03.2012**

(86) International application number:
**PCT/EP2012/055302**

(87) International publication number:
**WO 2012/130793 (04.10.2012 Gazette 2012/40)**

(54) **POLYPROPYLENE COMPOSITION FOR EXTRUSION BLOWN MOULDED BOTTLES**

POLYPROPYLENZUSAMMENSETZUNG FÜR EXTRUSIONSBLASGEFORMTE FLASCHEN

COMPOSITION DE POLYPROPYLÈNE POUR BOUTEILLES MOULÉES PAR EXTRUSION-SOUFFLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2011 EP 11159996**

(43) Date of publication of application:
**05.02.2014 Bulletin 2014/06**

(73) Proprietor: **Borealis AG**
**1220 Vienna (AT)**

(72) Inventors:
• **KLIMKE, Katja**
**A-4020 Linz (AT)**

• **DOSHEV, Petar**
**A-4040 Linz (AT)**
• **BERNREITNER, Klaus**
**A-4010 Linz (AT)**
• **MATTHIJS, Dirk**
**B-9910 Knesselare (BE)**
• **LATVAKANGAS, Timo**
**NL-6219AA Maastricht (NL)**

(74) Representative: **Lux, Berthold**
**Maiwald Patentanwalts GmbH**
**Elisenhof**
**Elisenstraße 3**
**80335 München (DE)**

(56) References cited:
**EP-A1- 1 873 203    EP-A2- 1 702 956**

## Description

The present invention is directed to a new polypropylene composition suitable for the preparation of articles, like bottles, as well as to articles, i.e. bottles, made from the new polypropylene composition.

It is well known in the polymer field that different applications require specifically tailored polymers to achieve the individual demanding properties. For instance a polymer used for injection molding must necessarily have other properties as a polymer used for blow molding.

The extrusion blow molding process for instance is a very special process that allows in a flexible and cheap way the preparation of different kind of bottles with respect to size and shape. Main drawback in this process is that the solidification step is very special compared to normal injection molding.

In the extrusion blow molding (EBM) process a polymer melt is first extruded through a tubular die into air forming a polymer tube, subsequently blowing up said polymer tube (typically called "parison" in this technical field) until the outside of the tube reaches the boundaries of the mold. To cover the wall of the mold fully with the blown up polymer tube is rather difficult compared to injection molding because the air between polymer tube and mold has to be removed totally which is a demanding process step. Further the inside of the polymer tube is not in contact with the mold and therefore there is only little possibility to influence the inner surface structure of the tube. As a consequence thereof extrusion blown molded articles, like bottles, normally show inferior optical properties compared to any injection molded articles. For instance, the surface property inside and/or outside of extrusion blown bottles is typically non-uniform (flow lines, melt fracture) leading to lower overall gloss and transparency compared to injection molded bottles or injection stretched blown molded articles (ISBM).

Thus there still the demand for EBM products with improved optical properties.

Further the EBM products shall be rather soft, for instance in terms of bottle compression, and shall have a rather high melting point which further extends the area of application.

Thus the object of the present invention is to provide a polypropylene composition which enables inter alia the preparation of bottles by an extrusion blow molding process, wherein the bottles are featured by good optical properties and softness at high melting temperature.

The finding of the present invention is that a composition must be provided comprising an $\alpha$-nucleated heterophasic propylene copolymer and a polyethylene, wherein further the matrix of the heterophasic propylene copolymer must comprise a random propylene copolymer. For further improvement of the properties the intrinsic viscosity (IV) of the xylene cold soluble (XCS) fraction must be rather low.

Accordingly the present invention is directed to a polypropylene composition comprising

(a) a heterophasic propylene copolymer (RAHECO) comprising

(a1) a matrix being a random propylene copolymer (R-PP), and
(a2) an elastomeric propylene copolymer (E) being dispersed in said matrix, and

(b) a polyethylene (PE),

wherein further

(i) said polypropylene composition and/or said heterophasic propylene copolymer (RAHECO) is/are $\alpha$-nucleated, and
(ii) said heterophasic propylene copolymer (RAHECO) has a melt flow rate measured according to ISO 1133 in the range of equal or more than 0.5 to equal or below 6.0 g/10min

and said heterophasic propylene copolymer (RAHECO) has a xylene cold soluble (XCS) fraction determined at 25°C according to ISO 16 152 of 20 to 35 wt%.

It is in particular appreciated that the xylene cold soluble (XCS) fraction determined at 25 °C according ISO 16152 of the heterophasic propylene copolymer (RAHECO) has a rather low intrinsic viscosity (IV), i.e. an intrinsic viscosity (IV) measured according to ISO 1628-1 (at 135 °C in decalin) of less or equal 2.2 dl/g.

It has been surprisingly found out that such a polypropylene composition has superior properties compared to known polypropylene compositions, in particular to those normally used for extrusion blown molding processes. The polypropylene composition of the present invention enables in particular to produce extrusion blow molded bottles with high gloss and transparency at low haze. Further the inventive material is soft and exhibits a rather high melting temperature (see experimental part).

In the following the present invention is described in more detail.

Preferably the weight ratio between the heterophasic propylene copolymer (RAHECO) and the polyethylene (PE) within the polypropylene composition is in the range of 3/1 to 13/1, more preferably in the range of 3/1 to 10/1, still more preferably in the range of 3/1 to 8/1.

Accordingly it is preferred that the polypropylene composition according to this invention comprises

(a) equal or more than 75.0 to equal or below 94.9999 wt.-%, more preferably equal or more than 80.0 to equal or below 92.995 wt.%, still more preferably equal or more than 85.0 to equal or below 90.995 wt.-%, of the heterophasic propylene copolymer (RAHECO),

(b) equal or more 5.0 to equal or below 24.9999 wt.-%, more preferably equal or more 7.0 to equal or below 19.995 wt.-%, still more preferably equal or more 9.0 to equal or below 14.995 wt.-%, of the polyethylene (PE),

(c) equal or below 0.0001 to equal or below 5.0 wt.-%, more preferably equal or below 0.005 to equal or below 2.0 wt.-%, of the $\alpha$-nucleating agent (N), and

based on the total composition (C), more preferably based on the total sum of the heterophasic propylene copolymer (RAHECO), the polyethylene (PE), and the $\alpha$-nucleating agent (N).

Further it is preferred that the polypropylene composition according to this invention has a melting temperature $(T_m)$ measured according to ISO 3146 of at least 140 °C, more preferably in the range of 142 to 155 °C, still more preferably in the range of 145 to 153 °C.

The term "random" as used in the instant invention indicates that the comonomers of the random propylene copolymers are randomly distributed within the propylene copolymers. The term random is understood according to IUPAC (Glossary of basic terms in polymer science; IUPAC recommendations 1996).

The expression "heterophasic" as used in the instant invention indicates that the elastomeric propylene copolymer (E) is (finely) dispersed in the matrix, i.e. in the random propylene copolymer (R-PP). In other words the elastomeric propylene copolymer (E) forms inclusions in the matrix, i.e. in the random propylene copolymer (R-PP). Thus the matrix contains (finely) dispersed inclusions being not part of the matrix and said inclusions contain the elastomeric propylene copolymer (E). The term "inclusion" according to this invention shall preferably indicate that the matrix and the inclusion form different phases within the heterophasic system, said inclusions are for instance visible by high resolution microscopy, like electron microscopy or scanning force microscopy.

Further it is preferred that the heterophasic propylene copolymer (RAHECO) comprises as polymer components only the random propylene copolymer (R-PP) and the elastomeric propylene copolymer (E). In other words the heterophasic propylene copolymer (RAHECO) may contain further additives but no other polymer in an amount exceeding 5 wt-%, more preferably exceeding 3 wt.-%, like exceeding 1 wt.-%, based on the total heterophasic propylene copolymer (RAHECO), more preferably based on the polymers present in the propylene copolymer (RAHECO). One additional polymer which may be present in such low amounts is a polyethylene which is a reaction product obtained by the preparation of the heterophasic propylene copolymer (RAHECO). Accordingly it is in particular appreciated that a heterophasic propylene copolymer (RAHECO) as defined in the instant invention contains only a random propylene copolymer (R-PP), an elastomeric propylene copolymer (E) and optionally a polyethylene in amounts as mentioned in this paragraph.

Additionally it is required that the heterophasic propylene copolymer (RAHECO) has a melt flow rate $MFR_2$ (230 °C) measured according to ISO 1133 in the range of equal or more than 0.5 to equal or below 6.0 g/10min, preferably in the range of 1.0 to 5.0 g/10 min.

Preferably it is desired that the heterophasic propylene copolymer (RAHECO) is thermomechanically stable. Accordingly it is appreciated that the heterophasic propylene copolymer (RAHECO) has a melting temperature $(T_m)$ measured according to ISO 3146 of at least 135 °C, more preferably in the range of 135 to 150 °C.

Preferably the propylene content in the heterophasic propylene copolymer (RAHECO) is 85.0 to 96.0 wt.-%, more preferably 88.0 to 94.0 wt.-%, based on the total heterophasic propylene copolymer (RAHECO), more preferably based on the amount of the polymer components of the heterophasic propylene copolymer (RAHECO), yet more preferably based on the amount of the random propylene copolymer (R-PP) and the elastomeric propylene copolymer (E) together. The remaining part constitutes the comonomers as defined for the random propylene copolymer (R-PP) and the elastomeric propylene copolymer (E), respectively, preferably ethylene.

As stated above the matrix of the heterophasic propylene copolymer (RAHECO) shall be a random propylene copolymer (R-PP). Accordingly it is appreciated that the random propylene copolymer (R-PP) has a comonomer content in the range of equal or more than 0.5 to equal or below 7.0 wt.-%, more preferably in the range of equal or more than 1.5 to equal or below 6.0 wt.-%, still more preferably in the range of equal or more than 2.5 to equal or below 5.0 wt.-%.

Apparent from the wording "propylene copolymer", said polymer must comprise apart from propylene other monomer units. Accordingly the random propylene copolymer (R-PP) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP) according to this invention comprises, especially consists of, monomers copolymerizable with propylene from the group consisting of ethylene, 1-butene and 1-hexene. More specifically the random propylene copolymer (R-PP) of this invention comprises - apart from propylene - units derivable from ethylene and/or 1-butene. In a preferred embodiment the random propylene copolymer (R-PP) comprises units derivable from ethylene and propylene only.

The random propylene copolymer (R-PP) according to this invention may comprise, preferably consists of, two different fractions. Accordingly it is preferred that the random propylene copolymer (R-PP) comprises, more preferably consists of, a first random propylene copolymer fraction (R-PP1) and a second random propylene copolymer fraction (R-PP2), both fractions differ in the melt flow rate and/or in the comonomer content, the latter preferred. In one embodiment the first random propylene copolymer fraction (R-PP1) is the comonomer lean fraction whereas the second random propylene copolymer fraction (R-PP1) is comonomer rich fraction.

Accordingly the random propylene copolymer (R-PP) comprises, preferably comprises at least to 90 wt.%, more preferably comprises at least to 98 wt.-%, like consists of,

(a) a first random propylene copolymer fraction (R-PP 1) and
(b) a second random propylene copolymer fraction (R-PP1),

together.

Preferably the weight ratio [(R-PP1)/(R-PP2)] between the first random propylene copolymer fraction (R-PP1) and the second random propylene copolymer fraction (R-PP2) is 70/30 to 30/70, more preferably 60/40 to 40/60, still more preferably 55/45 to 45/55, like 50/50.

The first random propylene copolymer fraction (R-PP1) and the second random propylene copolymer fraction (R-PP2) preferably comprise monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the first propylene copolymer fraction (R-PP 1) and the second random propylene copolymer fraction (R-PP2) comprise, especially consists of, monomers copolymerizable with propylene from the group consisting of ethylene, 1-butene and 1-hexene. More specifically the first random propylene copolymer (R-PP1) and the second random propylene copolymer fraction (R-PP2) comprise - apart from propylene - units derivable from ethylene and/or 1-butene. In a preferred embodiment the first random propylene copolymer (R-PP1) and the second random propylene copolymer fraction (R-PP2) comprise units derivable from ethylene and propylene only. It is especially preferred that the first random propylene copolymer fraction (R-PP1) and the second random propylene copolymer fraction (R-PP2) contain the same comonomers. Thus in one specific embodiment the first random propylene copolymer fraction (R-PP1) and the second random propylene copolymer fraction (R-PP2) contain only propylene and ethylene as polymerizable units.

Preferably, the first random propylene copolymer fraction (R-PP1) has a comonomer content in the range of equal or more than 0.5 to equal or below 5.5 wt.-%, more preferably in the range of equal or more than 1.0 to equal or below 4.0 wt.%, still more preferably in the range of equal or more than 1.5 to equal or below 3.5 wt.-% , preferably with the proviso that the comonomer content of the first random propylene copolymer fraction (R-PP1) is lower, preferably at least by 0.5 wt.-% lower, than the comonomer content of the second random propylene copolymer fraction (R-PP2).

Accordingly it is appreciated that the second random propylene copolymer fraction (R-PP2) has a comonomer content in the range of equal or more than 1.0 to equal or below 8.0 wt.-%, more preferably in the range of equal or more than 2.0 to equal or below 7.0 wt.-%, still more preferably in the range of equal or more than 3.5 to equal or below 6.0 wt.-%.

Additionally it is preferred that the matrix of the heterophasic propylene copolymer (RAHECO), i.e. the random propylene copolymer (R-PP) has a melt flow rate $MFR_2$ (230 °C) measured according to ISO 1133 in the range of equal or more than 0.5 to equal or below 8.0 g/10min, more preferably in the range of equal or more than 1.5 to equal or below 6.0 g/10min, yet more preferably in the range of equal or more than 2.5 to equal or below 5.0 g/10min.

One further essential component of the heterophasic propylene copolymer (RAHECO) is its elastomeric propylene copolymer (E).

The elastomeric propylene copolymer (E) preferably comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the elastomeric propylene copolymer (E) comprises, especially consists of, monomers copolymerizable with propylene from the group consisting of ethylene, 1-butene and 1-hexene. More specifically the elastomeric propylene copolymer (E) comprises - apart from propylene - units derivable from ethylene and/or 1-butene. Thus in an especially preferred embodiment the elastomeric propylene copolymer phase (E) comprises units derivable from ethylene and propylene only.

The properties of the elastomeric propylene copolymer phase (E) mainly influences the xylene cold soluble (XCS) content of the final heterophasic propylene copolymer (RAHECO). Thus according to the present invention the xylene cold soluble (XCS) fraction of heterophasic propylene copolymer (RAHECO) is regarded as the elastomeric propylene copolymer (E) of the heterophasic propylene copolymer (RAHECO).

Accordingly, the amount of the elastomeric propylene copolymer (E), i.e. of the xylene cold soluble (XCS) fraction determined at 25 °C according to ISO 16152, of the heterophasic propylene copolymer (RAHECO) is in the range of 20 to 35 wt.%, more preferably in the range of 20 to 30 wt.-%.

Accordingly one important requirement of the present invention is that the elastomeric propylene copolymer (E) has a rather low weight average molecular weight as this promotes the formation of small particles, i.e. small inclusions within the matrix of the heterophasic system. Low intrinsic viscosity (IV) values reflect a low weight average molecular weight. Thus it is appreciated that the elastomeric propylene copolymer phase (E), i.e. the xylene cold soluble fraction (XCS) of the heterophasic propylene copolymer (RAHECO), has an intrinsic viscosity (IV) measured according to ISO 1628-1 (at 135 °C in decalin) in the range of equal or more than 0.7 to equal or less than 2.0 dl/g, more preferably in the range of equal or more than 0.8 to equal or less than 1.8 dl/g, still more preferably in the range of equal or more than 0.9 to equal or less than 1.4 dl/g.

The comonomer content, preferably the ethylene content, within the elastomeric propylene copolymer phase (E) is comparatively moderate to low, as this further supports the formation of finely dispersed inclusions within the matrix, which in turn is favorable for the optical properties. Accordingly in a preferred embodiment the comonomer content, more preferably ethylene content, of the elastomeric propylene copolymer (E), i.e. of the xylene cold soluble fraction (XCS) of the heterophasic propylene copolymer (RAHECO), is equal or less than 35 wt.-%, more preferably in the range of equal or more than 15 to equal or less than 35 wt.-%, still more preferably in the range of equal or more than 20 to equal or less than, 30 wt.-%, yet more preferably in the range of equal or more than 22 to equal or less than 28 wt.-%. Accordingly it is appreciated that the propylene content of the elastomeric propylene copolymer (E), i.e. of the xylene cold soluble fraction (XCS) of the heterophasic propylene copolymer (RAHECO), is equal or more 65 wt.-%, more preferably in the range of equal or more than 65 to equal or less than 85 wt.%, still more preferably in the range of equal or more than 70 to equal or less than 80 wt.-%, yet more preferably in the range of equal or more than 72 to equal or less than 78 wt.-%.

As explained in detail below, the heterophasic propylene copolymer (RAHECO) is produced in a sequential polymerization process comprising at least three reactors, preferably three reactors, connected in series. Accordingly in case of a three reactor system in the first and second reactor the matrix, i.e. the first random propylene copolymer fraction (R-PP1) and the second random propylene copolymer fraction (R-PP2), is/are produced, whereas in the third reactor the elastomeric propylene copolymer (E) is obtained. The exact method is given in the example section.

In addition to the heterophasic propylene copolymer (RAHECO) the instant polypropylene composition must comprise a polyethylene (PE), preferably a low density polyethylene (LDPE) and/or a linear low density polyethylene (LLDPE).

Preferably the polyethylene (PE) has a density measured according to ISO 1183-187 in the range of 905 to 925 kg/m$^3$, more preferably in the range of 910 to 920 kg/m$^3$. Thus it is appreciated that the first polyethylene is a low density polyethylene (LDPE).

A further characteristic feature of the polyethylene (PE) is its melt flow rate. Accordingly it is appreciated that the polyethylene (PE) has a melt flow rate MFR$_2$ (190 °C) of below 30 g/10min, more preferably in the range of 8 to 30 g/10min, yet more preferably in the range of 10 to 20 g/10min.

The polyethylene (PE) preferably is characterized by a rather broad molecular weight distribution. Thus it is preferred that the molecular weight distribution (MWD) of the polyethylene (PE) determined by gel permeation chromatography (GPC) is of at least 10, more preferably of at least 20, yet more preferably in the range of 10 to 45, still yet more preferably in the range of 20 to 40.

The weight average molecular weight (Mw) of the polyethylene (PE) is preferably equal or above 100 kg/mol, more preferably in the range of 100 to 1000 kg/mol, yet more preferably in the range of 300 to 800 kg/mol.

Additionally it is appreciated that the polyethylene (PE) has a melting temperature of equal or below 120, more preferably in the range of 90 to 115 °C.

In a preferred embodiment the polyethylene (PE), i.e. the low density polyethylene (LDPE), is an ethylene copolymer or an ethylene homopolymer, the latter being preferred. Accordingly the ethylene content in the polyethylene (PE) is at least 80 wt.%, more preferably at least 90 wt.%.

The expression ethylene homopolymer used in the instant invention relates to a polyethylene that consists substantially, i.e. of more than 99.7 wt.-%, still more preferably of at least 99.8 wt.-%, of ethylene units. In a preferred embodiment only ethylene units in the ethylene homopolymer are detectable. The comonomer content can be determined with $^{13}$C NMR spectroscopy, as described below in the examples.

In case the polyethylene (PE), i.e. the low density polyethylene (LDPE), is an ethylene copolymer it is preferred that it contains as a major part units derivable from ethylene. Accordingly it is appreciated that the polyethylene (PE) being an ethylene copolymer comprises at least 80 wt.% units derivable from ethylene, more preferably at least 90 wt.-% of units derived from ethylene. Thus it is appreciated that the polyethylene (PE) being an ethylene copolymer comprises 80 to 99.5 wt.-%, more preferably 90 to 99 wt.-%, units derivable from ethylene. The comonomers present in such a polyethylene (PE) are $C_4$ to $C_{20}$ $\alpha$-olefins, like 1-butene, 1-hexene and 1-octene, the latter especially preferred, or dienes, preferably non-conjugated $\alpha,\omega$-alkadienes, i.e. $C_5$ to $C_{20}$ $\alpha,\omega$-alkadienes, like 1,7-octadiene. Accordingly in one specific embodiment the polyethylene (PE) being an ethylene copolymer is an ethylene-1,7-octadiene polymer with the amounts given in this paragraph.

Additionally it is appreciated that the polyethylene (PE) is dispersed in the matrix, i.e. in the random propylene copolymer (R-PP), of the heterophasic propylene copolymer (RAHECO).

Finally the instant polypropylene composition preferably comprises an $\alpha$-nucleating agent (N) to initiate an $\alpha$-phase within the polypropylene composition and/or within the heterophasic propylene copolymer (RAHECO).

In principle any $\alpha$-nucleating agent (N) can be used. Examples of suitable $\alpha$-nucleating agents (N) are selected from the group consisting of

(i) salts of monocarboxylic acids and polycarboxylic acids, e.g. sodium benzoate or aluminum tert-butylbenzoate, and

(ii) dibenzylidenesorbitol (e.g. 1,3 : 2,4 dibenzylidenesorbitol) and $C_1$-$C_8$-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and

(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and

(iv) vinylcycloalkane polymer and vinylalkane polymer, and

(v) mixtures thereof.

However it is preferred that the $\alpha$-nucleating agent (N) is in particular selected from the group consisting of

(i) salts of monocarboxylic acids and polycarboxylic acids, e.g. sodium benzoate or aluminum tert-butylbenzoate,

(ii) dibenzylidenesorbitol (e.g. 1,3 : 2,4 dibenzylidenesorbitol) and $C_1$-$C_8$-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 bis(dimethylbenzylidene) sorbitol),

(iii) substituted nonitol-derivatives, such as 1,2,3,-trideoxy-4,6:5,7-bis-O-[(4-propylphenyl)methylene]-nonitol,

(iv) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], like aluminium-hydroxy-bis[2,2'-methylene-bis(4,6-di-tert-butylphenyl)phosphate] and Li-myristate (NA21),

(v) trisamide-benze derivatives, i.e. N-[3,5-bis-(2,2-dimethyl-propioriylamino)-phenyl]-2,2-dimethyl-propionamide,

(vi) vinylcycloalkane polymer and vinylalkane polymer, and

(vii) mixtures thereof.

Such additives are generally commercially available and are described, for example, in Gachter/Muller, Plastics Additives Handbook, 4th Edition, Hansa Publishers, Munich, 1993.

The $\alpha$-nucleating agent (N) content of the polypropylene composition is preferably up to 5.0 wt.%. In a preferred embodiment, the polypropylene composition of the present invention contain from equal or below 0.0001 to equal or below 5.0 wt.-%, more preferably from 0.0001 to 1.0 wt.-%, preferably from 0.0005 to 0.50 wt.-%, of a $\alpha$-nucleating agent (N), in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof. It is especially preferred that the polypropylene composition contains a vinylcycloalkane, like vinylcyclohexane (VCH), polymer and/or vinylalkane polymer. In one preferred embodiment said vinylcycloalkane polymer, like vinylcyclohexane (VCH), and/or vinylalkane polymer is provided in form of a mixture of a propylene homopolymer and of said vinylcycloalkane polymer and/or said vinylalkane polymer. Reference is made in this context to WO 99/24479.

The present invention is also directed to the use of the above defined polypropylene composition. Accordingly the polypropylene composition as defined in the instant invention is used for the preparation of molded products, like extrusion blown molded products. More particularly the present invention is directed to the use of the polypropylene composition of the instant invention to improve optical properties by keeping the softness on a high level of extrusion blown molded articles, like extrusion blown molded bottles, made out of said polypropylene composition compared to conventional extrusion blown molded bottles, in particular compared to extrusion blown molded bottles made out of the comparative examples CE1.

Further the present invention is directed to molded articles, like extrusion blown molded articles, comprising, preferably comprising at least 90 wt.-%, more preferably consisting of, a polypropylene composition according to this invention. More particularly the present invention is directed to bottles produced by an extrusion blown process comprising, preferably comprising at least 90 wt.-%, more preferably consisting of, a polypropylene composition according to this invention.

In the following the preparation of the inventive polypropylene composition is described in more detail.

The individual components used for the inventive polypropylene composition are known by the person skilled in the art and thus can be readily produced by the information provided herein.

Further the invention defines a process for the preparation of the polypropylene composition according to this invention. The process comprises the steps of mixing up a composition comprising the random propylene copolymer (R-PP) and the elastomeric propylene copolymer (E) (i.e. the heterophasic propylene copolymer (RAHECO)), the polyethylene (PE), and the $\alpha$-nucleating agent (N) in an extruder.

All components used for the preparation of the instant composition are known. Accordingly also their preparation is well known.

For instance the heterophasic propylene copolymer (RAHECO) according to this invention is preferably produced in a multistage process known in the art, wherein the random propylene copolymer (R-PP) is produced at least in one slurry reactor, preferably in a slurry reactor and subsequently in a gas phase reactor, and subsequently the elastomeric propylene copolymer (E) is produced at least in one gas phase reactor.

The heterophasic propylene copolymer (RAHECO) as defined above is in particular produced by a sequential polymerization process as defined below.

Accordingly the present invention is directed to a sequential polymerization process for producing a heterophasic propylene copolymer (RAHECO) according to the instant invention, said heterophasic propylene copolymer (RAHECO) comprises a first random propylene copolymer fraction (R-PP1), a first random propylene copolymer fraction (R-PP2), and an elastomeric copolymer (E), wherein said process comprises the steps of

(a) polymerizing propylene and at least one ethylene and/or $C_4$ to $C_{12}$ $\alpha$-olefin in a first reactor (R1) obtaining the first random propylene copolymer fraction (R-PP1),

(b) transferring the first random propylene copolymer fraction (R-PP1) into a second reactor (R2),

(c) polymerizing in the second reactor (R2) and in the presence of said first random propylene copolymer fraction (R-PP1) propylene and at least one ethylene and/or $C_4$ to $C_{12}$ $\alpha$-olefin obtaining thereby the second random propylene copolymer fraction (R-PP2), said first random propylene copolymer fraction (R-PP1) and said second random propylene copolymer fraction (R-PP2) form the random propylene copolymer fraction (R-PP),

(d) transferring the random propylene copolymer fraction (R-PP) of step (c1) into a third reactor (R3),

(e) polymerizing in the third reactor (R3) and in the presence of the mixture obtained in step (c1) propylene and at least one ethylene and/or $C_4$ to $C_{12}$ $\alpha$-olefin obtaining thereby an elastomeric propylene copolymer (E), the elastomeric propylene copolymer (E) is dispersed in the random propylene copolymer (R-PP).

Of course, in the first reactor (R1) the second random propylene copolymer fraction (R-PP2) can be produced and in the second reactor (R2) the first random propylene copolymer fraction (R-PP1) is obtained.

Preferably between the second reactor (R2) and the third reactor (R3) the monomers are flashed out.

For preferred embodiments of the heterophasic propylene copolymer (RAHECO), the random propylene copolymer (R-PP), the first random propylene copolymer fraction (R-PP1), the second random propylene copolymer fraction (R-PP2), and the elastomeric propylene copolymer (E) reference is made to the definitions given above.

The term "sequential polymerization process" indicates that the heterophasic propylene copolymer (RAHECO) is produced in at least two, like three reactors connected in series.

Accordingly the present process comprises at least a first reactor (R1) and a second reactor (R2), more preferably a first reactor (R1), a second reactor (R2), and a third reactor (R3). The term "polymerization reactor" shall indicate that the main polymerization takes place. Thus in case the process consists of four polymerization reactors, this definition does not exclude the option that the overall process comprises for instance a pre-polymerization step in a pre-polymerization reactor. The term "consist of" is only a closing formulation in view of the main polymerization reactors.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2) and the third reactor (R3) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like a loop reactor (LR), whereas the second reactor (R2) and the third reactor (R3) are gas phase reactors (GPR). Accordingly for the instant process at least two, preferably three polymerization reactors, namely a slurry reactor (SR), like a loop reactor (LR), a first gas phase reactor (GPR-1) and a second gas phase reactor (GPR-2) connected in series are used. If needed prior to the slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic propylene copolymer (RAHECO) as defined above the conditions for the first reactor (R1), i.e. the slurry reactor (SR), like a loop reactor (LR), of step (a) may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor (R3), preferably in the second gas phase reactor (GPR-2), is similar to the second reactor (R2).

The residence time can vary in the three reactor zones.

In one embodiment of the process for producing the heterophasic propylene copolymer (RAHECO) the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the heterophasic propylene copolymer (RAHECO) is obtained by a multistage polymerization process, as described above, in the presence of a Ziegler-Natta olefin polymerization catalyst comprising a component in the form of particles having a predetermined size range which has been produced in a process comprising:

a) preparing a solution of a complex of a Group 2 metal and an electron donor by reacting a compound of said metal with said electron donor or a precursor thereof in an organic liquid reaction medium,

b) reacting said complex in solution with a compound of a transition metal, preferably of any of groups 4 - 6, to produce an emulsion the dispersed phase of which containing more than 50 mol% of the Group 2 metal in said complex.

c) maintaining the particles of said dispersed phase within the average size range of 5 to 200 micrometers, preferably 10 to 100 micrometers, even more preferably 20 to 50 micrometers by agitation in the presence of an emulsion stabilizer and

d) solidifying said particles, and recovering, optionally washing said particles to obtain said catalyst component.

The group 2 metal used in the preparation of the catalyst is preferably magnesium and the liquid organic medium for reacting the group 2 metal compound preferably comprises a $C_6$-$C_{10}$ aromatic hydrocarbon, preferably toluene.

An electron donor compound to be reacted with the group 2 metal compound preferably is a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a $C_2$-$C_{16}$ alkanol and/or diol, and is preferably dioctyl phthalate or bis-(2-ethylhexyl) phthalate.

The reaction for the preparation of the group 2 metal complex is generally carried out at a temperature of 20 to 80 °C, and in case that the group 2 metal is magnesium, the preparation of the magnesium complex may advantageously be carried out at a temperature of 50 to 70 °C.

The compound of a group 4-6 metal is preferably a compound of a group 4 metal. The group 4 metal is preferably titanium, and its compound to be reacted with the complex of a group 2 metal is preferably a halide.

In a still further embodiment of the invention, the compound of a group 4-6 metal can also be selected from group 5 and group 6 metals, such as Cu, Fe, Co, Ni and/or Pd compounds. In a preferred embodiment of the production process of the catalyst a turbulence minimizing agent (TMA) is added to the reaction mixture before solidifying said particles of the dispersed phase, the TMA being inert and soluble in the reaction mixture under reaction conditions.

The turbulence minimizing agent (TMA) or mixtures thereof are preferably polymers having linear aliphatic carbon backbone chains, which might be branched with only short side chains in order to serve for uniform flow conditions when stirring. Said TMA is in particular preferably selected from alpha-olefin polymers having a high molecular weight Mw (as measured by gel permeation chromatography) of about 1 to 40 x $10^6$, or mixtures thereof. Especially preferred are polymers of alpha-olefin monomers with 6 to 20 carbon atoms, and more preferably polyoctene, polynonene, polydecene, polyundecene or polydodecene or mixtures thereof, having the molecular weight and general backbone structure as defined before. Most preferably the TMA is polydecene.

Usually, said turbulence minimizing agent can be added in any process step before particle formation starts, i.e. at the latest before solidification of the emulsion, and is added to the emulsion in an amount of 1 to 1000 ppm, preferably 5 to 100 ppm and more preferably 5 to 50 ppm, based on the total weight of the reaction mixture.

A preferred embodiment of the process for producing catalysts for preparing heterophasic propylene copolymer (RAHECO) of the present invention comprises: preparing a solution of a magnesium complex by reacting alkoxy magnesium compound and an electron donor or precursor thereof in a $C_6$-$C_{10}$ aromatic liquid reaction medium comprising $C_6$-$C_{10}$ aromatic hydrocarbon or a mixture of $C_6$-$C_{10}$ aromatic hydrocarbon and $C_5$-$C_9$ aliphatic hydrocarbon; reacting said magnesium complex with a compound of at least one fourvalent group 4 metal at a temperature greater than 10 °C and less than 60 °C, to produce an emulsion of a denser, $TiCl_4$/toluone-insoluble, oil dispersed phase having a group 4 metal/Mg mol ratio of 0.1 to 10 in an oil disperse phase having a group 4 metal/Mg mol ratio of 10 to 100; maintaining the droplets of said dispersed phase within the size range of 5 to 200 micrometers by agitation in the presence of an emulsion stabilizer while heating the emulsion to solidify said droplets and adding turbulence minimizing agent into the reaction mixture before solidifying said droplets of the dispersed phase, said turbulence minimizing agent being inert and soluble in the reaction mixture under reaction conditions; and solidifying said particles of the dispersed phase by heating and recovering the obtained catalyst particles.

The said disperse and dispersed phases are thus distinguishable from one another by the fact that the denser oil, if contacted with a solution of titanium tetrachloride in toluene, will not dissolve in it. A suitable $TiCl_4$/toluene solution for establishing this criterion would be one having a $TiCl_4$/toluene mol ratio of 0.1 to 0.3. The disperse and dispersed phase are also distinguishable by the fact that the great preponderance of the Mg provided (as complex) for the reaction with the group 4 metal compound is present in the dispersed phase, as revealed by comparison of the respective group 4 metal /Mg mol ratios.

In effect, therefore, virtually the entirety of the reaction product of the Mg complex with the group 4 metal, which is the precursor of the final catalyst, becomes the dispersed phase, and proceeds through further processing steps to the final dry particulate form. The disperse phase, still containing a useful quantity of group 4 metal, can be reprocessed for recovery of that metal.

The production of a two-phase, rather than a single phase reaction product is encouraged by carrying out the Mg complex/group 4 metal compound reaction at low temperature, specifically above 10 °C but below 60 °C, preferably between 20 and 50 °C. Since the two phases will naturally tent to separate into a lower, denser phase and a supernatant lighter phase, it is necessary to maintain the reaction product as an emulsion by agitation, preferably in the presence of an emulsion stabilizer.

The resulting particles from the dispersed phase of the emulsion are of a size, shape (spherical) and uniformity which render the final catalyst extremely effective in olefin polymerization. This morphology is preserved during the heating to solidify the particles, and of course throughout the final washing and drying steps. It is, by contrast, difficult to the point of impossibility to achieve such morphology through precipitation, because of the fundamental uncontrollability of nucleation and growth, and the large number of variables which affect these events.

The electron donor is preferably an aromatic carboxylic acid ester, particularly favored esters being dioctyl phthalate and bis-(2-ethylhexyl) phthalate. The donor may conveniently be formed in situ by reaction of an aromatic carboxylic acid chloride precursor with a $C_2$-$C_{16}$ alkanol and/or diol. The liquid medium preferably comprises toluene.

Furthermore, emulsifying agents/emulsion stabilizers can be used additionally in a manner known in the art for facilitating the formation and/or stability of the emulsion. For said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particularly preferred are unbranched $C_{12}$ to $C_{20}$ acrylates such as poly(hexadecyl)-metacrylate and poly(octadecyl)-metacrylate.

It has been found that the best results are obtained when the group 4 metal/Mg mol ratio of the denser oil is 1 to 5, preferably 2 to 4, and that of the disperse phase oil is 55 to 65. Generally, the ratio of the mol ratio of group 4 metal/Mg in the disperse phase oil to that in the denser oil is at least 10.

Solidification of the dispersed phase droplets by heating is suitably carried out at a temperature of 70 to 150 °C, usually at 90 to 110 °C.

The finally obtained catalyst is desirably in the form of particles having average size ranges of 5 to 200 micrometers, preferably 10 to 100 micrometers, more preferably 20 to 50 micrometers.

The reagents can be added to the aromatic reaction medium in any order. However, it is preferred that in a first step the alkoxy magnesium compound is reacted with a carboxylic acid halide precursor of the electron donor to form an intermediate; and in a second step the obtained product is further reacted with the group 4 metal. The magnesium compound preferably contains from 1 to 20 carbon atoms per alkoxy group, and the carboxyl acid should contain at least 8 carbon atoms.

Reaction of the magnesium compound, carboxylic acid halide and alcohol proceeds satisfactorily at temperatures in the range of 20 to 80 °C, preferably 50 to 70 °C. The product of that reaction, the "Mg complex", is reacted with the group 4 metal compound at a lower temperature, to bring about the formation of a two-phase, oil-in-oil, product.

The reaction medium used as solvent can be aromatic or a mixture of aromatic and aliphatic hydrocarbons, the latter one containing preferably 5 to 9 carbon atoms, more preferably 5 to 7 carbon atoms, or mixtures thereof. Preferably, the liquid reaction medium used as solvent in the reaction is aromatic and is more preferably selected from hydrocarbons such as substituted and unsubstituted benzenes, preferably from alkylated benzenes, even more preferably from toluene and the xylenes, and most preferably being toluene. The molar ratio of said aromatic medium to magnesium is preferably less than 10, for instance from 4 to 10, preferably from 5 to 9.

The alkoxy magnesium compound group is preferably selected from the group consisting of magnesium dialkoxides, complexes of magnesium dihalide and an alcohol, and complexes of a magnesium dihalide and a magnesium dialkoxide. It may be a reaction product of an alcohol and a magnesium compound selected from the group consisting of dialkyl magnesium, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides, and alkyl magnesium aryloxides.

The magnesium dialkoxide may be the reaction product of a magnesium dihalide such as magnesium dichloride or a dialkyl magnesium of the formula $R'_x R''_y M_g$, wherein $x + y = 2$ and x and y are in the range of 0.3 to 1.7 and each one of R' and R'' is a similar or different $C_1$-$C_{20}$ alkyl, preferably a similar or different $C_4$-$C_{10}$ alkyl. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Preferably R' is a butyl group and R'' is an octyl group, i.e. the dialkyl magnesium compound is butyloctyl magnesium, most preferably the dialkyl magnesium compound is $Mg[(Bu)_{1.5}(Oct)_{0.5}]$.

Dialkyl magnesium, alkyl magnesium alkoxide or magnesium dihalide can react with a polyhydric alcohol $R(OH)_m$, with m being in the range of 2-4, or a monohydric alcohol ROH or mixtures thereof.

Typical $C_2$ to $C_6$ polyhydric alcohol may be straight-chain or branched and include ethylene glycol, propylene glycol, trimethylene glycol, 1,2-butylene glycol, 1,3- butylene glycol, 1,4-butylene glycol, 2,3-butylene glycol, 1,5-pentanediol, 1,6-hexanediol, 1,8-octanediol, pinacol, diethylene glycol, triethylene glycol, and triols such as glycerol, methylol propane and pentaerythritol.

The aromatic reaction medium may also contain a monohydric alcohol, which may be straight or branched chain. Typical $C_1$-$C_5$ monohydric alcohols are methanol, ethanol, n-propanol, iso-propanol, n-butanol, iso-butanol, sec. butanol, tert. butanol, n-amyl alcohol, iso-amyl alcohol, sec. amyl alcohol, tert. amyl alcohol, diethyl carbinol, akt. amyl alcohol, sec. isoamyl alcohol, tert. butyl carbinol. Typical $C_6$-$C_{10}$ monohydric alcohols are hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol, and 2,7-dimethyl-2-octanol. Typical > $C_{10}$ monohydric alcohols are n-1-undecanol, n-1-dodecanol, n-1-tridecanol, n-1-tetradecanol, n-1-pentadecanol, n-1-hexadecanol, n-1-heptadecanol, and n-1-octadecanol. The monohydric alcohols may be unsaturated, as long as they do not act as catalyst poisons.

Preferable monohydric alcohols are those of formula ROH in which R is a $C_2$-$C_{16}$ alkyl group, most preferably a $C_4$-$C_{12}$ alkyl group, particularly 2-ethyl-1-hexanol or 1-octanol. Preferably, essentially all of the aromatic carboxylic acid ester is a reaction product of a carboxylic acid halide, preferably a dicarboxylic acid dihalide, more preferably an unsaturated dicarboxylic acid dihalide, most preferably phthalic acid dichloride, with the monohydric alcohol.

The compound of a fourvalent group 4 metal containing a halogen is preferably a titanium tetrahalide. Equivalent to titanium tetrahalide is the combination of an alkoxy titanium halide and a halogenation agent, which are able to form a titanium tetrahalide in situ. The most preferred halide is the chloride.

As is known, the addition of the at least one halogenated hydrocarbon during the catalyst preparation process can lead to further improved catalytic activity. Reactive halogenated hydrocarbons preferably have the formula R'''X'''$_n$, wherein R''' is a $C_1$-$C_{20}$ hydrocarbyl group, particularly a $C_1$-$C_{10}$ aliphatic hydrocarbyl group, X''' is a halogen, preferably chlorine, and n is an integer from 1 to 4.

Such chlorinated hydrocarbons include monochloromethane, dichloromethane, trichloromethane (chloroform), tetrachloromethane, monochloroethane, (1,1)-dichloroethane, (1,1)-dichloroethane, (1,1,1)-trichloroethane, (1,1,2)-trichloroethane, (1,1,1,2)-tetrachlororethane, (1,1,2,2)-tetrachloroethane, pentachloroethane, hexachloroethane, 1-chloropropane, 2-chloropropane, (1,2)-dichloropropane, (1,3)-dichloropropane, (1,2,3)-trichloropropane, 1-chlorobutane, 2-chlorobutane, isobutyl chloride, tert. butyl chloride,

(1,4)-dichlorobutane, 1-chloropentane, and (1,5)-dichloropentane. The chlorinated hydrocarbons may also be unsaturated, provided that the unsaturation does not act as catalyst poison in the final catalyst.

In the above formula, R''' is preferably a $C_1$-$C_{10}$ alkyl group, X''' is preferably chlorine and n is preferably 1 or 2. Preferred compounds include butyl chloride (BuCl), dichloroalkanes such as (1,4)-dichlorobutane, and tertiary butyl chloride.

The catalyst preparation as described herein can be carried out batchwise, semi-continuously or continuously. In such a semi-continuous or continuous process, the solution of the complex of the group 2 metal and said electron donor, which is prepared by reacting the compound of said metal with said electron donor in an organic liquid reaction medium, is mixed with at least one compound of a transition metal which might be solved in the same or different organic liquid reaction medium. The so obtained solution is then agitated, possibly in the presence of an emulsion stabilizer, and then the agitated emulsion is fed into a temperature gradient reactor, in which the emulsion is subjected to a temperature gradient, thus leading to solidifying the droplets of a dispersed phase of the emulsion. The TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve that droplet formation and thus leading to a uniform grain size of the particles of the catalyst, which are formed in the temperature gradient reactor when passing through said line. Such additional solvent might be the same as the organic liquid reaction medium, which is used for preparing the solution of the complex of the group 2 metal as explained above in more detail.

The solidified particles of the catalyst can subsequently be recovered by an in-stream filtering unit and are preferably subjected to washing in order to remove unreacted starting components.

The recovered particulate product is washed at least once, preferably at least twice, most preferably at least three times with a hydrocarbon, which is preferably selected from aromatic and aliphatic hydrocarbons, preferably with toluene, particularly with hot (e.g. 90 °C) toluene, which may include a small amount, preferably about 0.01 - 10 vol% of TiCl$_4$ or an alkyl aluminium chloride, such as diethyl aluminium chloride (DEAC), in it. A further washing step is advantageous performed with heptane, most preferably with hot (e.g. 90 °C) heptane, and a still further washing step with pentane. A washing step typically includes several substeps. A favored washing sequence is, for example, one washing step with toluene at 90 °C, two washing steps with heptane at 90 °C and one or two washing steps with pentane at room temperature.

Finally, the washed catalyst is dried, e.g. by evaporation or flushing with nitrogen.

After washing and drying the catalyst can be stored for further use or can be subjected to further treatment steps or can immediately be fed to a polymerization reactor.

The catalyst system which is used according to the present invention also comprises an aluminium alkyl compound, preferably of the general formula AlR$_{3-n}$X$_n$ wherein R stands for straight chain or branched alkyl group having 1 to 20, preferably 1 to 10 and more preferably 1 to 6 carbon atoms, X stands for halogen and n stands for 0, 1, 2 or 3, which aluminium alkyl compound is added, and brought into contact with the droplets of the dispersed phase of the agitated emulsion before recovering the solidified particles of the catalyst.

It is further preferred that at least a part of the aluminium compound is added, in pure form or in the form of a solution, from shortly before the beginning of the emulsion formation until adding it to the washing liquid, e.g. toluene, in such an amount that the final A1 content of the particles is from 0.05 to 1 wt%, preferably 0.1 to 0.8 wt% and most preferably 0.2 to 0.7 wt%. by weight of the final catalyst particles. The most preferred Al content may vary depending upon the type of the Al compound and on the adding step. For example, in some cases the most preferred amount may be 0.1 to 0.4 wt%.

Still further, preferably tri-($C_1$-$C_6$)-alkyl aluminium compounds are used, tiethylaluminium being most preferred.

In Ziegler-Natta catalysts alumimium alkyl compounds are used as cocatalysts, i.e. for activating the catalyst. During activation of polypropylene catalysts, alkyl aluminium does not only reduce and alkylate the actice metal, but it has also influence on the donor composition. It is well-known that alkyl aluminium compounds can remove carboxylic acid esters, which are used as internal donors. Simultaneously, external donors can be fixed on the catalyst. Typically, tri-ethyl aluminium (TEAl) is used as cocatalyst and silanes as external donors as is disclosed e.g. in articles Sacci, M. C.; Forlini, F.; Tritto, I and Locatelli, P., Macromolecules, 1996, 29, 3341-3345 and Sacci, M. C.; Tritto, I.; Shan, C. and Mendichi, R., Macromolecules, 1991, 24, 6823-6826.

In the catalysts used in the present invention, the internal donor, preferably bis-(2-ethylhexyl) phthalate (DOP), can be significantly extracted from the catalyst with the use of the alkyl aluminium compound. The extraction level is dependent on the concentration of the aluminium alkyl. The higher the concentration, the more of the internal donor can be extracted. Further, the addition of the external donor together with aluminium alkyl improves the donor exchange. The longer the reaction time is, the more external donor is bound on the catalyst.

Particularly preferred external donors are any of the following: cyclohexyl methyl dimethyloxysilane, dicyclopentyl dimethoxysilane, diisopropyl dimethoxysilane, di-isobutyl dimethoxysilane and di-tert.-butyl dimethoxysilane. Most preferred are cyclohexyl methyl dimethoxysilane and dicyclopentyl dimethoxysilane, cyclohexyl methyl dimethoxysilane being particularly preferred. Especially preferred are dicyclopentyl dimethoxy silane [$Si(OCH_3)_2(\text{cyclo-pentyl})_2$] cyclohexyl methyl dimethoxysilane [$Si(OCH_3)_2(CH_3)(\text{cyclo-hexyl})_2$] and diisopropyl dimethoxy silane [$Si(OCH_3)_2(CH(CH_3)_2)_2$].

It is preferred that a solution containing alkyl aluminium and external donor in an organic solvent, e.g. pentane, are added to the catalyst after solidification of the catalyst particles.

The catalyst which is obtained by the above described process is a non-supported Ziegler-Natta catalyst. Non-supported catalysts do not use any external carrier, contrary to conventional catalysts, e.g. conventional Ziegler-Natta catalysts, which are e.g. supported on silica or $MgCl_2$.

Further preferred embodiments of the catalyst system production include all preferred embodiments as described in WO 03/000754.

Additives can be added afterwards to the heterophasic propylene copolymer (RAHECO), which is collected from the final reactor of the series of reactors. Preferably, these additives are mixed into the composition prior to or during the extrusion process in a one-step compounding process. Alternatively, a master batch may be formulated, wherein the heterophasic propylene copolymer (RAHECO) is first mixed with only some of the additives.

Further, the polymer composition in accordance with the present invention may be prepared by compounding the components within suitable melt mixing devices for preparing polymeric compounds, including in particular extruders single screw extruders as well as twin screw extruders. Other suitable melt mixing devices include planet extruders and single screw co-kneaders. Especially preferred are twin screw extruders including high intensity mixing and kneading sections. Suitable melt temperatures for preparing the compositions are in the range from 170 to 300 °C, preferably in the range from 200 to 260 °C.

For the preparation of extrusion molded articles an extrusion blown process as known in the art is applied.

In the following the present invention is further illustrated by means of examples.

**EXAMPLES**

**A. Measuring methods**

The following definitions of terms and determination methods apply for the above general description of the invention as well as to the below examples unless otherwise defined. **Calculation** of comonomer content of the second random propylene copolymer fraction (R-PP2):

$$\frac{C(RPP) - w(RPP1)x\, C(RPP1)}{w(RPP2)} = C(RPP2)$$

wherein

w(RPP1)   is the weight fraction of the first random propylene copolymer fraction (R-PP1), i.e. the product of the first reactor (R1),

w(RPP2)   is the weight fraction of the second random propylene copolymer fraction (R-PP2), i.e. of the polymer produced in the second reactor (R2),

C(RPP1) is the comonomer content [in wt.-%] measured by $^{13}$C NMR spectroscopy of the first random propylene copolymer fraction (R-PP1), i.e. of the product of the first reactor (R1),

C(RPP) is the comonomer content [in wt.-%] measured by $^{13}$C NMR spectroscopy of the product obtained in the second reactor (R2), i.e. the mixture of the first random propylene copolymer fraction (R-PP1) and the second random propylene copolymer fraction (R-PP2),

C(RPP2) is the calculated comonomer content [in wt.-%] of the second random propylene copolymer (R-PP2).

**Comonomer content,** especially ethylene content,is measured with Fourier transform infrared spectroscopy (FTIR) calibrated with $^{13}$C-NMR. When measuring the ethylene content in polypropylene, a thin film of the sample (thickness about 250 $\mu$m) was prepared by hot-pressing. The area of absorption peaks 720 and 733 cm$^{-1}$ for propylene-ethylene-copolymers was measured with Perkin Elmer FTIR 1600 spectrometer. Propylene-1-butene-copolymers were evaluated at 767 cm$^{-1}$. The method was calibrated by ethylene content data measured by $^{13}$C-NMR. Seee also "IR-Spektroskopie für Anwender"; WILEY-VCH, 1997 and "Validierung in der Analytik", WILEY-VCH, 1997

**Number average molecular weight ($M_n$), weight average molecular weight ($M_w$) and molecular weight distribution (MWD)** are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 $\mu$L of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Density** is measured according to ISO 1183-187. Sample preparation is done by compression moulding in accordance with ISO 1872-2:2007.

**MFR$_2$ (230 °C)** is measured according to ISO 1133 (230 °C, 2.16 kg load).

**MFR$_2$ (190 °C)** is measured according to ISO 1133 (190 °C, 2.16 kg load).

**The xylene solubles (XCS, wt.-%):** Content of xylene cold solubles (XCS) is determined at 25 °C according ISO 16152; first edition; 2005-07-01.

**Intrinsic viscosity** is measured according to DIN ISO 1628/1, October 1999 (in Decalin at 135 °C).

**Melting temperature ($T_m$) and heat of fusion ($H_f$), crystallization temperature ($T_c$) and heat of crystallization ($H_c$):** measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and **heat of crystallization** ($H_c$) are determined from the cooling step, while melting temperature and **heat of fusion** ($H_f$) are determined from the second heating step

**Tensile Modulus; Tensile strain at break** are measured according to ISO 527-2 (cross head speed = 1 mm/min; 23 °C) using injection molded specimens as described in EN ISO 1873-2 (dog bone shape, 4 mm thickness).

**Description / Dimension of the bottles**

11 bottles, having an outer diameter of 90 mm, wall thickness: 0.6 mm; overall-height of 204 mm, height of the cylindrical mantle of 185 mm

**Drop test on bottles (progressive)**

During the progressive drop test each container is dropped several times in a row from increasing heights. The test is stopped for each container when fracture occurs.

The drop test is performed on extrusion blow moulded 11 bottles, having an outer diameter of 90 mm, a wall thickness of 0.6 mm, an overall-height of 204 mm and a height of the cylindrical mantle of 185 mm. The bottles are filled up to their shoulder with water.

For each test series at least 12 containers are required. 4 containers are dropped simultaneously from a starting height which is chosen according to the following table, where the expected fracture drop height has been determined in pretests or has been chosen from experience:

| Expected fracture drop height [m] | 0.3 - 1.0 | 1.0-2.5 | 2.5-5.0 |
|---|---|---|---|
| Starting drop height [m] | 0.2 | 0.5 | 2.0 |

Those bottles that show fracture are discarded and the test is continued with the remaining bottles at increasing heights. The size of the steps by which the height is increased depends on the starting height. Below a starting height of 0.5 m the step size is 0.1 m while equal to or above 0.5 m the step size is 0.25 m. The fracture drop height is noted for each bottle and from the single values the average fracture drop height is calculated according to the following formula:

$$h_p = \sum (h_i)/ n_g$$

wherein

$h_p$ = average fracture drop height
$h_i$ = individual fracture drop height
$n_g$ = total number of dropped containers

**Transparency, Clarity and Haze measurement on bottles**

Instrument: Haze-gard plus from BYK-Gardner
Testing: according to ASTM D1003 (as for injection molded plates)
Method: The measurement is done on the outer wall of the bottles. The top and bottom of the bottles are cut off. The resulting round wall is then split in two, horizontally. Then from this wall six equal samples of app. 60x60 mm are cut from close to the middle. The specimens are placed into the instrument with their convex side facing the haze port. Then the transparency, haze and clarity are measured for each of the six samples and the haze value is reported as the average of these six parallels.

**Tensile test on bottles**

The top and bottom of the bottles is cut off. 12 specimen according to ISO527/1B are punched along the remaining cylinder. Tensile modulus and yield strength are then determined according to ISO 527-2, applying a traction speed of 1 mm/min for the modulus and 100 mm/min for yield strength.

**Gloss measurement on bottles**

Instrument: Sceen TRI-MICROGLOSS 20-60-80 from BYK-Gardner
Testing: ISO 2813 (as for injection molded plates)
Method: The top and bottom of the bottles are cut off. The resulting round wall is then split in two, horizontally. Then from this wall six equal samples of app. 60x60 mm are cut from close to the middle. The gloss at an angle of 20° is measured in machine direction on these six samples, and the average value is reported as gloss at 20°.

**2. Preparation of the Examples**

RAHECO 1    is the commercial heterophasic propylene copolymner SA233CF of Borealis AG (properties see table 1)
RAHECO 2    is the commercial heterophasic propylene copolymner SC820CF of Borealis AG (properties see table 1)
LDPE 1        is the commercial low density polyethylene LE6607 PH of Borealis AG
LDPE 2        is the commercial low density polyethylene CA9150 of Borealis AG
R-PP          is the commercial random propylene copolymer RB501BF of Borealis AG
BNT           is a propylene homopolymer with an MFR2 (230 °C) of 1.9 g/10min containing 27 ppm vinylcyclohexane (VCH)

**Table 1:** Properties of the heterophasic propylene copolymers (RAHECO)

|  |  | **RAHECO 1** | **RAHECO 2** |
|---|---|---|---|
| C2 | [wt.-%] | 9.9 | 9.7 |
| XCS | [wt.-%] | 24.4 | 23.7 |
| C2 of XCS | [wt.-%] | 27.7 | 30.3 |
| Viscosity of XCS | [dl/g] | 2.5 | 1.5 |
| MFR$_2$ | [g/10 min] | 1.0 | 3.9 |
| Tm | [°C] | 140 | 141 |

For the production of 1 liter round bottles like used for testing in the inventive work a "Fischer Müller" Blow Molding Machine was used. The main processing parameters for the production are as follows:

- Temperature profile: 180 to 200 °C applied in extruder, adapter and head
- Melt temperature measured: 190 to 200°C
- Speed of extruder (revolution per minute; rpm): 13 to 16 rpm
- Die gap: the die gap was adjusted to get a bottle with a weight of 40 g with Borealis grade RB307MO (random propylene copolymer with a density of 902 kg/m$^3$ and a MFR$_2$ of 1.5 g/10min)
- Cycle time: 12 to 16 seconds

**Table 2:** EBM Bottles - Properties

|  |  | CE1 | CE2 | CE3 | CE4 | CE5 | IE1 |
|---|---|---|---|---|---|---|---|
| LDPE 1 | [wt.-%] | 100 | - | - | - | - | - |
| R-PP | [wt.-%] | - | 100 | - | - | - | - |
| RAHECO 1 | [wt.-%] | - | - | 100 |  | - | - |
| RAHECO 2 | [wt.-%] | - | - | - | 100 | 97 | 85 |
| BNT | [wt.-%] | - | - | - | - | 3 | 3 |
| LDPE2 | [wt.-%] | - | - | - | - | - | 12 |
| Bottle compression test | | | | | | | |
| max. force | [N] | 168 | 333 | 259 | 249 | 258 | 186 |
| Tensile test on specimens cut from bottles | | | | | | | |
| tensile modulus (MD) | [MPa] | 244 | 629 | 464 | 507 | 617 | 528 |
| tensile modulus (TD) | [MPa] | 238 | 625 | 426 | 505 | 551 | 469 |
| Bottle drop test - progressive | | | | | | | |
| av. drop height 23°C | [m] | 5.5 | 3.3 | 5.4 | 3.7 | 5.1 | 4.8 |
| av. drop height 0°C | [m] | 4.4 | 1.4 | 5.3 | 3.3 | 4.7 | 3.7 |
| Optical properties | | | | | | | |
| transparency | [%] | 90 | 94 | 86 | 85 | 81 | 86 |
| haze | [%] | 35 | 4 | 68 | 51 | 47 | 34 |
| clarity | [%] | 75 | 70 | 20 | 56 | 75 | 81 |
| gloss 20° | [%] | 21 | 19 | 3 | 13 | 20 | 16 |
| Tm | [°C] |  |  | 139 | 142 | 148 | 148 |
| ΔH | [J/g] |  |  | 75 | 70 | 76 | 50 |
| MFR | [g/10min] |  |  |  |  | 4.0 | 5.0 |

**Claims**

1. Polypropylene composition comprising

   (a) heterophasic propylene copolymer (RAHECO) comprising

      (a1) a matrix being a random propylene copolymer (R-PP),
      (a2) an elastomeric propylene copolymer (E) being dispersed in said matrix,

   and
   (b) a polyethylene (PE),
   wherein further

      (i) said polypropylene composition and/or said heterophasic propylene copolymer (RAHECO) is/are α-nucleated,
      and
      (ii) said heterophasic propylene copolymer (RAHECO) has a melt flow rate measured according to ISO 1133 in the range of equal or more than 0.5 to equal or below 6.0 g/10min,
      and
      (iii) said heterophasic propylene copolymer (RAHECO) has a xylene cold soluble (XCS) fraction determined at 25 °C according ISO 16152 of 20 to 35 wt.-%.

2. Polypropylene composition according to claim 1, wherein the weight ratio between the heterophasic propylene copolymer (RAHECO) and the polyethylene (PE) is in the range of 3/1 to 13/1.

3. Polypropylene composition according to claim 1 or 2, wherein the polypropylene composition has a melting temperature ($T_m$) measured according to ISO 3146 of at least 140 °C.

4. Polypropylene composition according to any one of the preceding claims, wherein the random propylene copolymer (R-PP) has

   (a) a comonomer content of equal or more than 0.5 to equal or below 7.0 wt.-%, the comonomers are ethylene and/or at least one $C_4$ to $C_{12}$ α-olefin,
   and/or
   (b) a melt flow rate measured according to ISO 1133 in the range of equal or more than 0.5 to equal or below 8.0 g/10min.

5. Polypropylene composition according to any one of the preceding claims, wherein the xylene cold soluble (XCS) fraction determined at 25 °C according ISO 16152 of the heterophasic propylene copolymer (RAHECO) has an intrinsic viscosity (IV) measured according to ISO 1628-1 (at 135°C in decalin) in the range of more than 0.7 to less or equal 2.0 dl/g.

6. Polypropylene composition according to any one of the preceding claims, wherein the xylene cold soluble (XCS) fraction determined at 25 °C according ISO 16152 of the heterophasic propylene copolymer (RAHECO) has a propylene content of equal or more than 65.0 to equal or below 85.0 wt.-%.

7. Polypropylene composition according to any one of the preceding claims, wherein the polyethylene (PE) is dispersed in the matrix of the heterophasic propylene copolymer (RAHECO).

8. Polypropylene composition according to any one of the preceding claims, wherein the polyethylene (PE) has

   (a) an ethylene content of at least 80 wt.-%,
   and/or
   (b) a molecular weight distribution determined by gel permeation chromatography (GPC) of at least 10,
   and/or
   (c) a density measured according to ISO 1183-187 in the range of 905 to 925 kg/m$^3$.

9. Polypropylene composition according to any one of the preceding claims, wherein the polypropylene composition

comprises additionally an $\alpha$-nucleating agent (NA).

10. Polypropylene composition according to claim 9, wherein the $\alpha$-nucleating agent (N) is selected from the group consisting of

(i) salts of monocarboxylic acids and polycarboxylic acids,
(ii) dibenzylidenesorbitol and $C_1$-$C_8$-alkyl-substituted dibenzylidenesorbitol derivatives,
(iii) salts of diesters of phosphoric acid,
(iv) vinylcycloalkane polymer and vinylalkane polymer, and
(v) mixtures thereof.

11. Polypropylene composition according to any one of the preceding claims, wherein the polypropylene composition comprises

(a) equal or more than 75.0 to equal or below 94.9999 wt.-% the heterophasic propylene copolymer (RAHECO),
(b) equal or below 5.0 to equal or below 24.9999 wt.-% of the polyethylene (PE), and
(c) equal or below 0.0001 to equal or below 5.0 wt.% of the $\alpha$-nucleating agent (N),

based on the total polypropylene composition.

12. Use of a polypropylene composition according to anyone of the preceding claims for the preparation of a molded article, preferably an extrusion blown molded article.

13. Molded article, preferably extrusion blown molded article comprising a polypropylene composition according to anyone of the preceding claims 1 to 11.

14. Article according to claim 13, wherein the article is a bottle.

**Patentansprüche**

1. Polypropylen-Zusammensetzung, umfassend

(a) heterophasisches Propylen-Copolymer (RAHECO), umfassend

(a1) eine Matrix, die ein statistisches Propylen-Copolymer (R-PP) ist,
(a2) ein elastomeres Propylen-Copolymer (E), das in der Matrix dispergiert ist,

und
(b) ein Polyethylen (PE),
wobei weiterhin

(i) die Polypropylen-Zusammensetzung und/oder das heterophasische Propylen-Copolymer (RAHECO) $\alpha$-nukleiert ist/sind,
und
(ii) das heterophasische Propylen-Copolymer (RAHECO) eine Schmelze-Fließ-Rate, gemessen gemäß ISO 1133, in dem Bereich von gleich oder mehr als 0,5 bis gleich oder unter 6,0 g/10 min aufweist,
und
(iii) das heterophasische Propylen-Copolymer (RAHECO) eine in kaltem Xylol lösliche Fraktion (XCS), bestimmt bei 25°C gemäß ISO 16152, von 20 bis 35 Gew.-% aufweist.

2. Polypropylen-Zusammensetzung nach Anspruch 1, wobei das Gewichtsverhältnis zwischen dem heterophasischen Propylen-Copolymer (RAHECO) und dem Polyethylen (PE) in dem Bereich von 3/1 bis 13/1 liegt.

3. Polypropylen-Zusammensetzung nach Anspruch 1 oder 2, wobei die Polypropylen-Zusammensetzung eine SchmelzTemperatur ($T_m$), gemessen gemäß ISO 3146, von mindestens 140°C aufweist.

4. Polypropylen-Zusammensetzung nach einem der vorangehenden Ansprüche, wobei das statistische Propylen-Copolymer (R-PP) aufweist

(a) einen Comonomer-Gehalt von gleich oder mehr als 0,5 bis gleich oder unter 7,0 Gew.-%, wobei die Comonomere Ethylen und/oder mindestens ein $C_9$ bis $C_{12}$ $\alpha$-Olefin darstellen,
und/oder
(b) eine Schmelze-Fließ-Rate, gemessen gemäß ISO 1133, in dem Bereich von gleich oder mehr als 0,5 bis gleich oder unter 8,0 g/10 min.

5. Polypropylen-Zusammensetzung nach einem der vorangehenden Ansprüche, wobei die in kaltem Xylol lösliche Fraktion (XCS), bestimmt bei 25°C gemäß ISO 16152, des heterophasischen Propylen-Copolymers (RAHECO) eine Grenzviskosität (IV), gemessen gemäß ISO 1628-1 (bei 135°C in Decalin), in dem Bereich von mehr als 0,7 bis weniger oder gleich 2,0 dl/g aufweist.

6. Polypropylen-Zusammensetzung nach einem der vorangehenden Ansprüche, wobei die in kaltem Xylol lösliche Fraktion (XCS), bestimmt bei 25°C gemäß ISO 16152, des heterophasischen Propylen-Copolymers (RAHECO) einen Propylen-Gehalt von gleich oder mehr als 65,0 bis gleich oder unter 85,0 Gew.-% aufweist.

7. Polypropylen-Zusammensetzung nach einem der vorangehenden Ansprüche, wobei das Polyethylen (PE) in der Matrix des heterophasischen Propylen-Copolymers (RAHECO) dispergiert ist.

8. Polypropylen-Zusammensetzung nach einem der vorangehenden Ansprüche, wobei das Polyethylen (PE) aufweist

(a) einen Ethylen-Gehalt von mindestens 80 Gew.-%, und/oder
(b) eine Molekular-Gewichts-Verteilung, bestimmt durch Gel-Permeations-Chromatographie (GPC), von mindestens 10,
und/oder
(c) eine Dichte, gemessen gemäß ISO 1183-187, in dem Bereich von 905 bis 925 kg/m$^3$.

9. Polypropylen-Zusammensetzung nach einem der vorangehenden Ansprüche, wobei die Polypropylen-Zusammensetzung zusätzlich ein $\alpha$-Keimbildungs-Mittel (NA) umfasst.

10. Polypropylen-Zusammensetzung nach Anspruch 9, wobei das $\alpha$-Keimbildungs-Mittel (N) ausgewählt ist aus der Gruppe, bestehend aus

(i) Salzen von Monocarbonsäuren und Polycarbonsäuren,
(ii) Dibenzylidensorbit und $C_1$-$C_8$-Alkyl-substituierten Dibenzylidensorbit-Derivaten,
(iii) Salzen von Diestern von Phosphorsäure,
(iv) Vinylcycloalkan-Polymer und Vinylalkan-Polymer, und
(v) Gemischen davon.

11. Polypropylen-Zusammensetzung nach einem der vorangehenden Ansprüche, wobei die Polypropylen-Zusammensetzung umfasst

(a) gleich oder mehr als 75,0 bis gleich oder unter 94,9999 Gew.-% des heterophasischen Propylen-Copolymers (RAHECO),
(b) gleich oder unter 5,0 bis gleich oder unter 24,9999 Gew.-% des Polyethylens (PE), und
(c) gleich oder unter 0,0001 bis gleich oder unter 5,0 Gew.-% des $\alpha$-Keimbildungs-Mittels(N),

basierend auf der gesamten Polypropylen-Zusammensetzung.

12. Verwendung einer Polypropylen-Zusammensetzung nach einem der vorangehenden Ansprüche zur Herstellung eines Form-Gegenstands, vorzugsweise eines Extrusions-blasgeformten Gegenstands.

13. Form-Gegenstand, vorzugsweise Extrusions-blas-geformter Gegenstand, umfassend eine Polypropylen-Zusammensetzung nach einem der vorangehenden Ansprüche 1 bis 11.

14. Gegenstand nach Anspruch 13, wobei der Gegenstand eine Flasche ist.

**Revendications**

1. Composition de polypropylène comprenant

   (a) un copolymère de propylène hétérophasique (RAHECO) comprenant

      (a1) une matrice qui est un copolymère de propylène statistique (R-PP),
      (a2) un copolymère de propylène élastomère (E) qui est dispersé dans ladite matrice,

   et
   (b) un polyéthylène (PE),
   dans laquelle en outre

      (i) ladite composition de polypropylène et/ou ledit copolymère de propylène hétérophasique (RAHECO) est/sont $\alpha$-nucléé(s),
      et
      (ii) ledit copolymère de propylène hétérophasique (RAHECO) présente un indice de fluage, mesuré conformément à la norme ISO 1133, situé dans la plage allant de 0,5 g/10 min ou plus à 6,0 g/10 min ou moins,
      et
      (iii) ledit copolymère de propylène hétérophasique (RAHECO) présente une fraction soluble dans le xylène froid (XCS),
      déterminée à 25°C conformément à la norme ISO 16152, de 20 à 35 % en poids.

2. Composition de polypropylène selon la revendication 1, dans laquelle le rapport en poids entre le copolymère de propylène hétérophasique (RAHECO) et le polyéthylène (PE) est situé dans la plage allant de 3:1 à 13:1.

3. Composition de polypropylène selon la revendication 1 ou 2, laquelle composition de polypropylène présente un point de fusion ($T_m$), mesuré conformément à la norme ISO 3146, d'au moins 140°C.

4. Composition de polypropylène selon l'une quelconque des revendications précédentes, dans laquelle le copolymère de propylène statistique (R-PP) présente

   (a) une teneur en comonomères allant de 0,5 % ou plus à 7,0 % en poids ou moins, les comonomères étant l'éthylène et/ou au moins une $\alpha$-oléfine en $C_9$ à $C_{12}$,
   et/ou
   (b) un indice de fluage, mesuré conformément à la norme ISO 1133, situé dans la plage allant de 0,5 g/10 min ou plus à 8,0 g/10 min ou moins.

5. Composition de polypropylène selon l'une quelconque des revendications précédentes, dans laquelle la fraction soluble dans le xylène froid (XCS), déterminée à 25°C conformément à la norme ISO 16152, du copolymère de propylène hétérophasique (RAHECO), présente une viscosité intrinsèque (IV), mesurée conformément à la norme ISO 1628-1 (à 135°C dans la décaline), située dans la plage allant de plus de 0,7 à 2,0 dl/g ou moins.

6. Composition de polypropylène selon l'une quelconque des revendications précédentes, dans laquelle la fraction soluble dans le xylène froid (XCS), déterminée à 25°C conformément à la norme ISO 16152, du copolymère de propylène hétérophasique (RAHECO), présente une teneur en propylène allant de 65,0 % ou plus à 85,0 % en poids ou moins.

7. Composition de polypropylène selon l'une quelconque des revendications précédentes, dans laquelle le polyéthylène (PE) est dispersé dans la matrice du copolymère de propylène hétérophasique (RAHECO).

8. Composition de polypropylène selon l'une quelconque des revendications précédentes, dans laquelle le polyéthylène (PE) présente

   (a) une teneur en éthylène d'au moins 80 % en poids, et/ou
   (b) une distribution des masses moléculaires, déterminée par chromatographie d'exclusion diffusion (GPC), d'au moins 10,
   et/ou

(c) une masse volumique, mesurée conformément à la norme ISO 1183-187, située dans la plage allant de 905 à 925 kg/m$^3$.

9. Composition de polypropylène selon l'une quelconque des revendications précédentes, laquelle composition de polypropylène comprend en outre un agent d'$\alpha$-nucléation (NA).

10. Composition de polypropylène selon la revendication 9, dans laquelle l'agent d'$\alpha$-nucléation (N) est choisi dans l'ensemble constitué par

    (i) les sels d'acides monocarboxyliques et d'acides polycarboxyliques,
    (ii) le dibenzylidènesorbitol et les dérivés de dibenzylidènesorbitol à substitution alkyle en C$_1$ à C$_8$,
    (iii) les sels de diesters d'acide phosphorique,
    (iv) les polymères de vinylcycloalcane et les polymères de vinylalcane, et
    (v) leurs mélanges.

11. Composition de polypropylène selon l'une quelconque des revendications précédentes, laquelle composition de polypropylène comprend

    (a) de 75,0 % ou plus à 94,9999 % en poids ou moins du copolymère de propylène hétérophasique (RAHECO),
    (b) de 5,0 % ou moins à 24,9999 % en poids ou moins du polyéthylène (PE), et
    (c) de 0,0001 % ou moins à 5,0 % en poids ou moins de l'agent d'$\alpha$-nucléation (N),

par rapport à la composition de polypropylène totale.

12. Utilisation d'une composition de polypropylène selon l'une quelconque des revendications précédentes pour la préparation d'un article moulé, de préférence d'un article moulé par extrusion-soufflage.

13. Article moulé, de préférence article moulé par extrusion-soufflage, comprenant une composition de polypropylène selon l'une quelconque des revendications 1 à 11.

14. Article selon la revendication 13, lequel article est une bouteille.

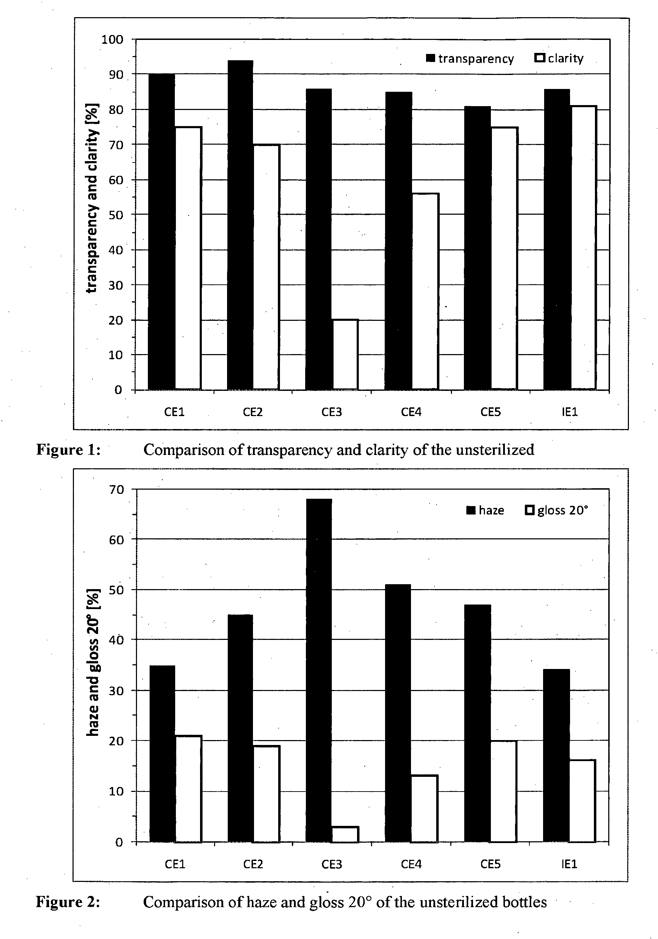

**Figure 1:** Comparison of transparency and clarity of the unsterilized

**Figure 2:** Comparison of haze and gloss 20° of the unsterilized bottles

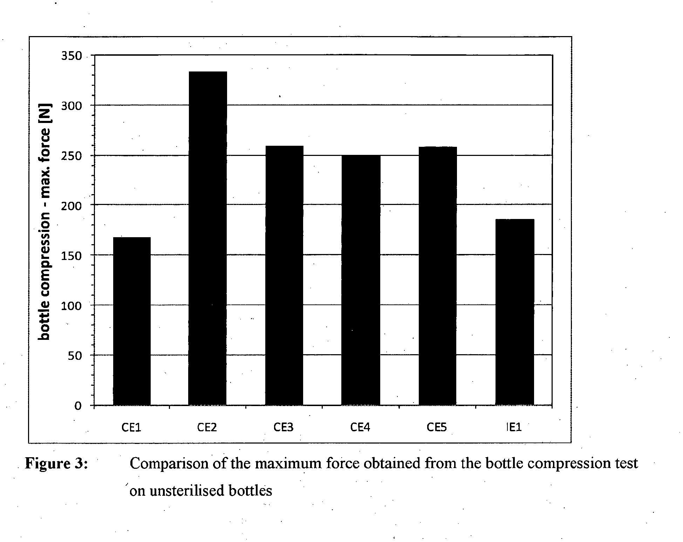

**Figure 3:** Comparison of the maximum force obtained from the bottle compression test on unsterilised bottles

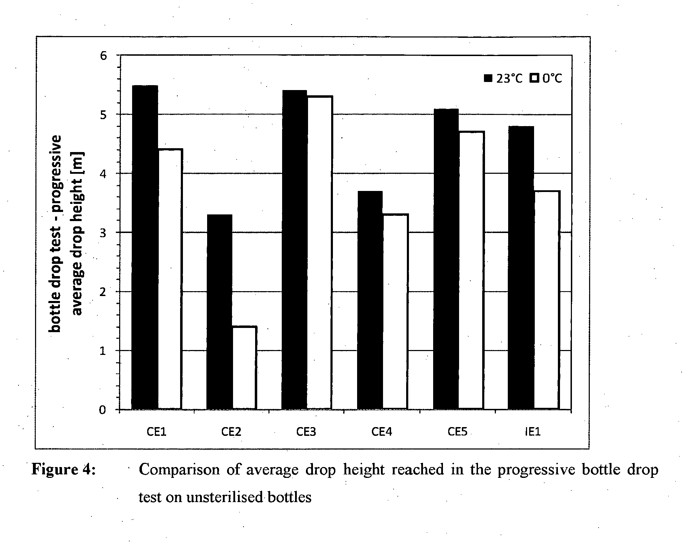

**Figure 4:** Comparison of average drop height reached in the progressive bottle drop test on unsterilised bottles

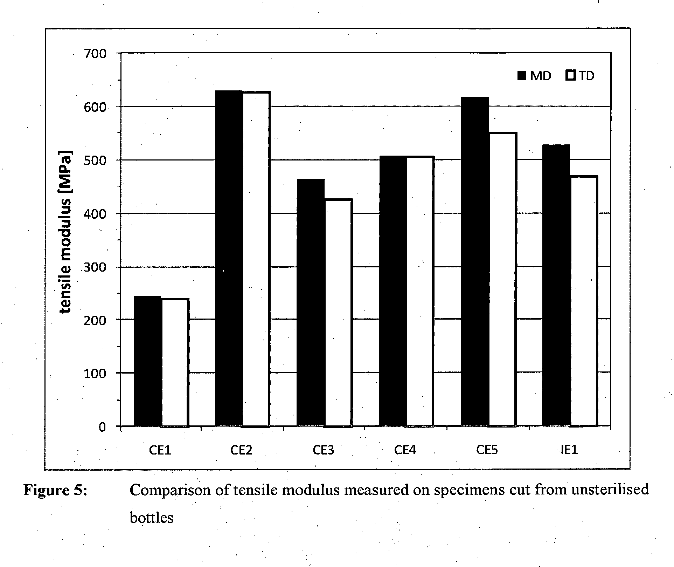

**Figure 5:** Comparison of tensile modulus measured on specimens cut from unsterilised bottles

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9924479 A
- EP 0887379 A
- WO 9212182 A
- WO 2004000899 A
- WO 2004111095 A
- WO 9924478 A
- WO 0068315 A
- WO 03000754 A

### Non-patent literature cited in the description

- Glossary of basic terms in polymer science. *IUPAC recommendations,* 1996
- **GACHTER/MULLER.** Plastics Additives Handbook. Hansa Publishers, 1993
- **SACCI, M. C. ; FORLINI, F. ; TRITTO, I ; LOCATELLI, P.** *Macromolecules,* 1996, vol. 29, 3341-3345
- **SACCI, M. C. ; TRITTO, I. ; SHAN, C. ; MENDICHI, R.** *Macromolecules,* 1991, vol. 24, 6823-6826
- IR-Spektroskopie für Anwender. WILEY-VCH, 1997
- Validierung in der Analytik. WILEY-VCH, 1997
- ISO 16152. 01 July 2005